# EUROPÄISCHE PATENTSCHRIFT

(11) **EP 1 916 179 B1**
(45) Veröffentlichungstag und Bekanntmachung des Hinweises auf die Patenterteilung: **11.02.2009**
(21) Anmeldenummer: 06022274.2
(22) Anmeldetag: 25.10.2006
(51) Int. Cl.: B62D 33/02, B61D 3/08

(54) **Vorrichtung zur Ladungssicherung auf einem Fahrzeug, insbesondere einem Eisenbahnfahrzeug**
Device for securing a load on a vehicle, especially for railway vehicle
Dispositif pour la fixation de charges sur un véhicule, notamment pour véhicule ferroviaire

(43) Veröffentlichungstag der Anmeldung: 30.04.2008
(73) Patentinhaber: Railion Deutschland AG, 55116 Mainz (DE)
(72) Erfinder: Rüthing, Norbert, 33104 Paderborn (DE); Wahle, Ansgar, 44892 Bochum (DE)
(74) Vertreter: Zinken-Sommer, Rainer

(56) Entgegenhaltungen:
- DE-C- 800 170
- DE-C- 824 803
- GB-A- 1 555 134
- US-A- 1 631 118

## Beschreibung

Die Erfindung betrifft eine Vorrichtung zur Ladungssicherung auf einem Fahrzeug, insbesondere einem Eisenbahnfahrzeug, wobei das Eisenbahnfahrzeug eine horizontale Auflagerfläche aufweist, die an ihren Längsseiten Aufnahmen für die senkrecht einsteckbaren, hülsenartigen Ladungssicherungsvorrichtungen, vorzugsweise Rungen, besitzt.

Eine Vorrichtung zur Ladungssicherung mit den im Oberbegriff von Anspruch 1 definierten Merkmalen ist aus der US-A-1 631 118 bekannt.

Rungen aus Walz- oder Blechprofilen für Fahrzeuge, insbesondere für Eisenbahnfahrzeuge, sind an sich seit langer Zeit bekannt (DE 800 170, DE 1 205 577). Die Rungen werden in der Regel durch ein Biegemoment beansprucht, welches vom oberen Bereich bis zur Einspannstelle in der Ladefläche anwächst und so den Querschnitt der Runge bestimmt.
Würde man eine Runge also als Träger gleicher Festigkeit ausbilden, so müsste die Querschnittsgestaltung mit der Höhe geändert werden.
Bekannt sind Rungen-Konstruktionen, welche im Schmiedeverfahren mit massivem Querschnitt hergestellt werden und mittels Achszapfen drehbar an der Ladefläche gelagert sind.

Bekannt ist eine Transportsicherung in Form einer Runge, wobei die Rungen jeweils drehsymmetrisch zu mindestens zwei Achsen gestaltet und jeweils aus gleichen Profilen mit jeweils einem mittig im Steg angeordneten C-förmigen Rücksprung ausgebildet sind (EP 240 768 A). Die Runge ist entweder aus Stahlblech oder aus Kunststoff hergestellt. Aus beiden Rungenteilen ergibt sich ein strukturiertes Hohlprofil, sodass eine gewisse Gewichtseinsparung und eine erhöhte Steifigkeit erreicht wird.

Weiterhin ist eine Steckrunge bekannt, deren Aufbau aus einem Stahlhohlprofil besteht, wobei innerhalb des Hohlprofils Versteifungsbleche angeordnet sind, um die Steifigkeit der Konstruktion zu erhöhen (WO 9 301 078 A).

Allen bekannten Ladungssicherungsvorrichtungen ist gemeinsam:
- aus Vollprofil bestehende Rungen sind sehr schwer und bedienungsunfreundlich
- Stahlprofilrungen weisen bislang oftmals zu geringe Festigkeiten (Knicksteifigkeit) auf und sind nicht ausreichend belastbar
- die Festigkeit gerade im Bereich der Einspannstelle der Runge in die Aufnahme der Ladefläche bzw. das Drehgelenk reichen für hohe Belastungen u. U. nicht aus
- das Drehgelenk rostet fest und die Runge lässt sich im Betriebseinsatz nicht mehr bedienen.

Der Erfindung liegt die Aufgabe zugrunde, eine Ladungssicherungsvorrichtung, insbesondere eine Runge zu entwickeln, die aus leichtem Stahlprofil hergestellt werden kann und dennoch eine sehr hohe Knicksteifigkeit gerade im Bereich der Einspannstelle aufweist. Die Runge soll preiswert und einfach herstellbar sein.

Dies wird erfindungsgemäß dadurch erreicht, dass
- im Endbereich der breiteren Seite der Ladungssicherungsvorrichtung in dieser mittig zwei weitere mit ihren offenen Seiten zueinander angeordnete U-förmige Profile eingezogen sind, an deren Stirnseiten wiederum jeweils zwei, mit der breiten Seite angelegte, U-Profile angeordnet sind, auf deren offener Seite jeweils ein gewinkeltes Blech als Abschluss aufgesetzt ist und
- im Mittelbereich der Ladungssicherungsvorrichtung in Richtung der Kontaktstelle beider U-Profile jeweils ein offenes U-Profil eingesetzt ist und
- im Endbereich der schmaleren Seite der Ladungssicherungsvorrichtung keine Einbauten vorhanden sind.

Beide Enden der Ladungssicherungsvorrichtung werden mittels eines Bleches verschlossen.

Die jeweils mit ihren offenen Seiten zusammengesetzten U-Profile werden an Ihren Kontaktstellen verschweißt. Dies erfolgt ebenfalls zwischen den Einbauten und den diese umschließenden beiden kastenförmigen U-Profilen sowie den beiden abgewinkelten Blechen.
Der Endbereich der breiteren Seite der Ladungssicherungsvorrichtung ist in einer Länge von maximal 700 mm verstärkt ausgeführt. Dies dient der Erhöhung der Knicksteifigkeit gerade im Einspannbereich der Rungen und damit der Belastbarkeit im Rahmen der Beladung der Fahrzeuge. Die Einbauten werden so ausgeführt, dass sie weitgehend aus speziell zueinander angeordneten U-Profilen aufgebaut sind. Dadurch wird sowohl Gewicht gespart und als auch ein einfacher Fertigungsprozess realisiert.

Der sich an den Endbereich der breiteren Seite (Einspannseite) anschließende Mittelbereich weist eine Ausdehnung von maximal 1300 mm auf. Je nach Belastung der Runge kann der Mittelbereich bis auf 650 mm verkürzt werden. In diesem Bereich werden als Einbauten nur noch zwei U-Profile verwendet, die mit ihrer offenen Seite zu den Kopfseiten des zu bildenden Kastenprofils ausgerichtet sind.

An diesen Mittelbereich schließt sich der weiter verjüngte Endbereich der Ladungssicherungsvorrichtung an, der den oberen Abschluss zur Ladung darstellt. Dieser Bereich wird ohne jede Einbauten ausgebildet und ist maximal 1050 mm, vorzugsweise 400 mm lang.

Vorteile der Erfindung:
- der erfindungsgemäß dreigeteilte Aufbau der Ladungssicherungsvorrichtung gewährleistet eine optimale Anpassung der Runge an die wechselnden Knickbelastungen durch die verschiedenen Ladungen
- während alle anderen bekannten Stahlprofilrungen in ihrer gesamten Länge (außer einer evtl. Verjüngung der Querschnittsfläche) im wesentlichen gleich aufgebaut sind, was auf der Einspannseite zu Unterdimensionierungen und in ihrem oberen Bereich regelmäßig zu Überdimensionierungen führen kann, wird dies durch den dreigeteilten Aufbau vermieden
- der dreigeteilte Aufbau ist an jede spezielle Ladung problemlos anpassbar, da bei der Fertigung die Länge der Einbauten nahezu beliebig variiert werden kann
- zur Fertigung können weitgehend handelsübliche U-Profile verwendet werden, die erfindungsgemäß zusammengesetzt und verschweißt werden
- dadurch sind diese Rungen relativ preiswert herstellbar
- die dreigeteilten Ladungssicherungsvorrichtungen sind insgesamt leichter, als vergleichbare Rungen und lassen sich leichter handhaben

Anhand eines Ausführungsbeispieles soll nachstehend die Erfindung näher erläutert werden.

Dabei zeigen:
- Figur 1 - die Runge im Längsschnitt
- Figur 2 - die Runge im Querschnitt
- Figur 3 - den Einspannbereich der Runge in die Aufnahme der Ladungs-Fläche im Querschnitt
- Figur 4 - den mittleren Bereich der Runge im Querschnitt
- Figur 5 - den oberen Bereich der Runge im Querschnitt

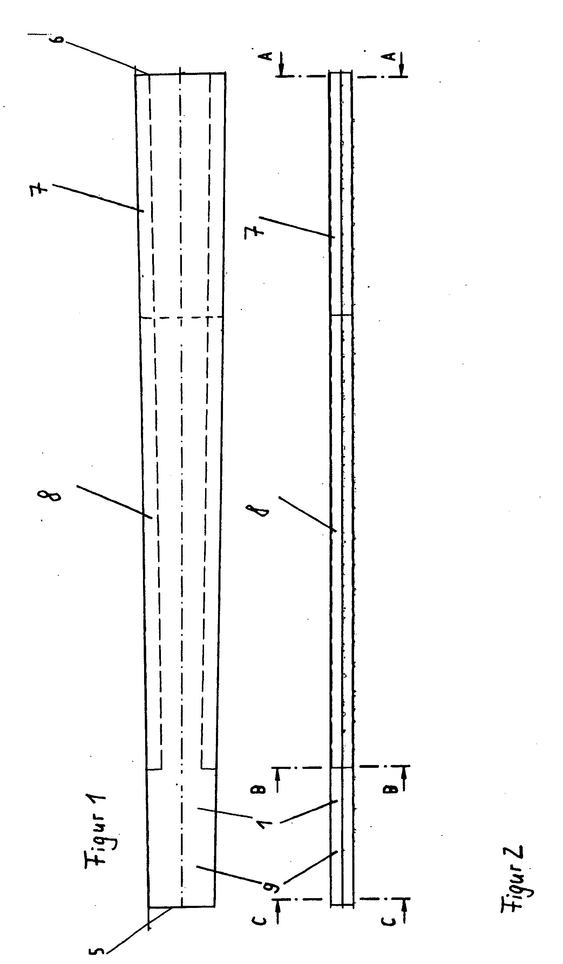

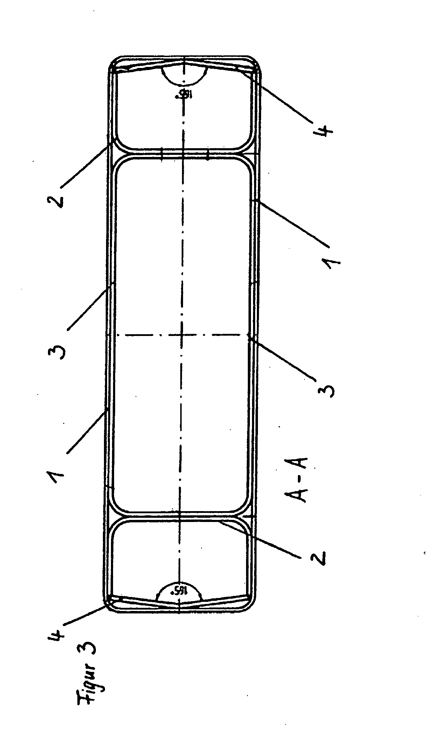

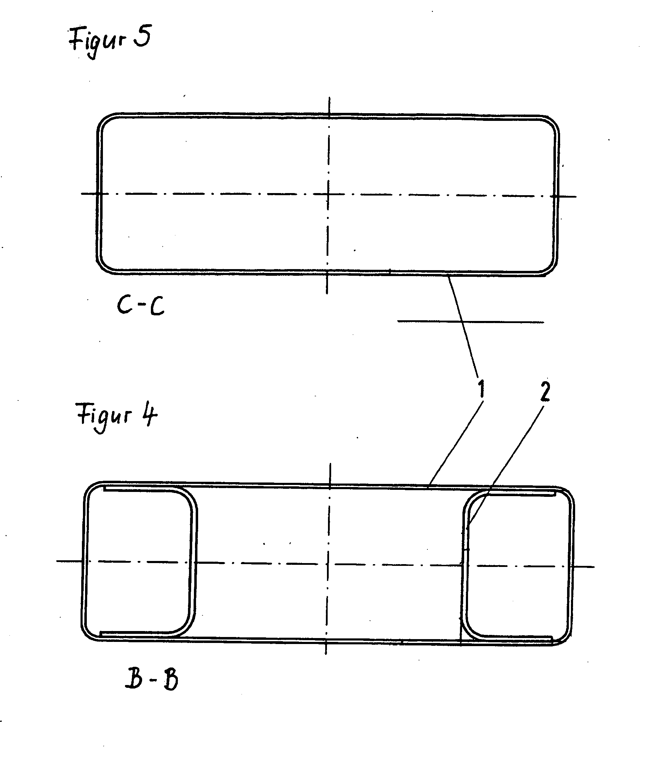

Die halbschalig ausgeführten U-Profile 1 werden zu einer kastenförmigen und sich einseitig verjüngenden Runge zusammengeschweißt (Figur 1; 2).
Die Runge ist dreiteilig aufgebaut und weist Einbauten auf.
Im Endbereich 7 der kastenförmigen Runge (Richtung Einspannung in der Ladefläche) sind mittig zwei ebenfalls kastenförmig zusammengefügte U-Profile 2 eingesetzt (Figur 3). Seitlich an diesen inneren U-Profil-Kasten 3 werden zwei weitere U-Profile 2 innerhalb des äußeren Kastens 1 angeschweißt, die mittel eines abgewinkelten Bleches 4 abgedeckt werden. Die gesamte Konstruktion der Einbauten 2; 3; 4 dient einer Aussteifung der Runge im am stärksten belasteten Bereich gegen Abknicken. Die spezielle Anordnung der Einbauten ermöglicht es, mit wenig Materialaufwand eine stark belastbare Runge herzustellen, die vielseitig einsetzbar ist.
An den Endbereich 7 schließt sich der Mittelbereich 8 an, der nur noch zwei am seitlichen Ende des äußeren Kastens eingezogene U-Profile 4 als Einbauten aufweist und dadurch in der Festigkeit erhöht ist (Figur 4).

Das obere Ende 9 der Runge ist dann nur noch als Hohlkasten aus den U-Profilen 1 gebildet (Figur 5). Hier tritt die geringste Knickbelastung an der Runge auf.

Auf dem oberen und dem unteren Bereich 7; 9 der Runge sind jeweils die Abdeckbleche 5; 6 angeordnet.

### Liste der verwendeten Bezugszeichen

- 1 -: U-Profil (außen)
- 2 -: U-Profil (innen)
- 3 -: U-Profil (innen)
- 4 -: abgewinkeltes Blech
- 5 -: Abdeckblech
- 6 -: Abdeckblech
- 7 -: Endbereich (unten)
- 8 -: Mittelbereich
- 9 -: Endbereich (oben)

## Patentansprüche

1. Vorrichtung zur Ladungssicherung auf einem Fahrzeug, insbesondere einem Eisenbahnfahrzeug, wobei das Eisenbahnfahrzeug eine horizontale Auflagerfläche aufweist, die an ihren Längsseiten Aufnahmen für die senkrecht einsteckbaren, hülsenartigen Ladungssicherungsvorrichtungen, vorzugsweise Rungen, besitzt, und
die Ladungssicherungsvorrichtung aus zwei mit ihren offenen Seiten zueinander angeordneten U-förmigen Profilen (1) kastenförmig zusammengesetzt ist, wobei sich beide Profile (1) in der Breite nach einer Seite verjüngen und die breitere Seite in die Aufnahme der Auflagerfläche des Fahrzeugs zu führen ist, **dadurch gekennzeichnet, das**
• im Endbereich der breiteren Seite der Ladungssicherungsvorrichtung in dieser mittig zwei weitere mit ihren offenen Seiten zueinander angeordnete U-förmige Profile (3) eingezogen sind, an deren Stirnseiten wiederum jeweils zwei, mit der breiten Seite angelegte, U-Profile (2) angeordnet sind, auf deren offener Seite jeweils ein gewinkeltes Blech (4) als Abschluss aufgesetzt ist und
• im Mittelbereich der Ladungssicherungsvorrichtung in Richtung der Kontaktstelle beider U-Profile (1) jeweils ein offenes U-Profil (2) eingesetzt ist und
• im Endbereich der schmaleren Seite der Ladungssicherungsvorrichtung keine Einbauten vorhanden sind.

2. Vorrichtung zur Ladungssicherung nach Anspruch 1, **dadurch gekennzeichnet, dass** beide Enden der Ladungssicherungsvorrichtung mittels eines Bleches verschlossen sind.

3. Vorrichtung zur Ladungssicherung nach Anspruch 1 und 2, **dadurch gekennzeichnet, dass** die jeweils mit ihren offenen Seiten zusammengesetzten U-Profile (1) an Ihren Kontaktstellen verschweißt sind.

4. Vorrichtung zur Ladungssicherung nach Anspruch 1 bis 3, **dadurch gekennzeichnet, dass** der Endbereich der breiteren Seite der Ladungssicherungsvorrichtung in einer Länge von maximal 700 mm verstärkt ausgeführt ist.

5. Vorrichtung zur Ladungssicherung nach Anspruch 1 bis 4, **dadurch gekennzeichnet, dass** der sich an den Endbereich der breiteren Seite anschließende Mittelbereich eine Ausdehnung von maximal 1300 mm aufweist.

6. Vorrichtung zur Ladungssicherung nach Anspruch 1 bis 5, **dadurch gekennzeichnet, dass** der Endbereich der schmaleren Seite eine Ausdehnung von mindestens 400 mm und keine Einbauten aufweist.

## Claims

1. A device for the load securing on a vehicle, more preferably a railway vehicle, wherein the railway vehicle comprises a horizontal bearing surface which on its longitudinal sides comprises receptacles for the vertically insertable, sleeve-like load securing devices, preferentially stanchions, and the load securing device is assembled box-shaped of two U-shaped profiles (1) arranged with their open sides towards each other, wherein both profiles (1) taper in width towards a side and the wider side is to be guided into the receptacle of the bearing surface of the vehicle,
**characterized in that**
- in the end region of the wider side of the load securing device two further U-shaped profiles (3) arranged with their open sides towards each other are put into the middle of said load securing device, on the end faces of which U-shaped profiles in turn two U-profiles (2) applied to the wider side are arranged, on the open side of which an angled plate (4) each is fitted as end closure and
- in the middle region of the load securing device in the direction of the contact point of both U-profiles (1) an open U-profile (2) each is inserted and
- in the end region of the narrower side of the load securing device no installations are present.

2. The device for the load securing according to Claim 1, **characterized in that** both ends of the load securing device are closed by means of a plate.

3. The device for the load securing according to Claim 1 and 2, **characterized in that** the U-profiles (1) each put together with their open sides are welded together at their contact points.

4. The device for the load securing according to Claims 1 to 3, **characterized in that** the end region of the wider side of the load securing device is embodied reinforced over a length of a maximum of 700 mm.

5. The device for the load securing according to Claims 1 to 4, **characterized in that** the middle region following the end region of the wider side has a maximum extent of 1300 mm.

6. The device for the load securing according to Claims 1 to 5, **characterized in that** the end region of the narrower side has a minimum extent of 400 mm and comprises no installations.

## Revendications

1. Dispositif de fixation de chargement sur un véhicule, notamment un véhicule ferroviaire, le véhicule ferroviaire comportant une surface d'appui horizontale qui possède au niveau de ses côtés longitudinaux des supports pour les dispositifs de fixation de chargement en forme de manchons et enfichables verticalement, de préférence des ridelles, et
le dispositif de fixation de chargement étant composé de deux profilés en forme de U (1) disposés l'un par rapport à l'autre en forme de caisson avec leurs côtés ouverts, les deux profilés (1) se rétrécissant en largeur vers un côté et le côté le plus large se guidant dans le support de la surface d'appui du véhicule,
**caractérisé en ce que**
• à l'extrémité du côté le plus large du dispositif de fixation de chargement, au milieu de celui-ci, sont insérés deux profilés en forme de U (3) disposés l'un par rapport à l'autre avec leurs côtés ouverts et sur les faces frontales desquels sont disposés à nouveau respectivement deux profilés en U (2) en contact avec le côté large et sur le côté ouvert desquels une tôle coudée (4) servant d'embout est respectivement posée et
• au centre du dispositif de fixation de chargement, en direction du point de contact des deux profilés en U (1) un profilé en U ouvert (2) est respectivement inséré et
• à l'extrémité du côté le plus étroit du dispositif de fixation de chargement, aucun insert n'est prévu.

2. Dispositif de fixation de chargement selon la revendication 1, **caractérisé en ce que** les deux extrémités du dispositif de fixation de chargement sont fermées par une tôle.

3. Dispositif de fixation de chargement selon les revendications 1 et 2, **caractérisé en ce que** les profilés en U (1) assemblés respectivement avec leurs côtés ouverts sont soudés à leurs points de contact.

4. Dispositif de fixation de chargement selon les revendications 1 à 3, **caractérisé en ce que** l'extrémité du côté le plus large du dispositif de fixation de chargement est réalisée avec une longueur de 700 mm au maximum.

5. Dispositif de fixation de chargement selon les revendications 1 à 4, **caractérisé en ce que** la zone centrale se raccordant à l'extrémité du côté le plus large a une extension de 1 300 mm au maximum.

6. Dispositif de fixation de chargement selon les revendications 1 à 5, **caractérisé en ce que** l'extrémité du côté le plus étroit a une extension d'au moins 400 mm et ne comporte pas d'inserts.
